# EUROPÄISCHE PATENTANMELDUNG

(11) **EP 1 294 185 A1**
(43) Veröffentlichungstag der Anmeldung: **19.03.2003**
(21) Anmeldenummer: 01120340.3
(22) Anmeldetag: 24.08.2001
(51) Int. Cl.: H04N 5/262, H04N 7/173

(54) **Fernsehsystem**

(71) Anmelder: FRAUNHOFER-GESELLSCHAFT ZUR FÖRDERUNG DER ANGEWANDTEN FORSCHUNG E.V., 80636 München (DE)
(72) Erfinder: Hüttemann, Kai, 58300 Wetter (DE); Tikwinski, Thomas, 53757 Sank Augustin (DE); Griesert, Arnfried, 42799 Leichlingen (DE); Glock, Georg, 53229 Bonn (DE)
(74) Vertreter: Hilleringmann, Jochen, Dipl.-Ing.

(57) **Zusammenfassung**

Das Fernsehsystem weist eine Studiokamera (14), einen Studiorechner (18) und einen Compositer (16) auf, in dem die Überlagerung des realen und des virtuellen Bildes erfolgt. Dieses Bild wird zusammen mit Applikationsprogrammen und Zusatzdaten an einer Dekodiervorrichtung (26) in Form einer SetTop-Box übertragen, in der die Zerlegung der Signale in ein Videobild und in ein die Applikation repräsentierendes Bild erfolgt. Diese werden auf einer Anzeigevorrichtung (30) angezeigt. Die SetTop-Box (26) ist mit einem Return-Channel-Server (32) verbunden, der wiederum mit dem Studiorechner (18) verbunden ist. Über eine Fernbedienung (26) lassen sich über die SetTop-Box (26) Kommandos und Daten an den Return-Channel-Server (32) versenden, der diese Daten und die von anderen SetTop-Boxen (26') empfangenen Daten verarbeitet und dem Studiorechner (18) zuführt. Das virtuelle Bild und die Alpha-Maske, die vom Studiorechner (18) erzeugt werden, werden unter Berücksichtigung der vom Return-Channel-Server (32) gelieferten Daten erstellt.

## Beschreibung

Die Erfindung betrifft ein Fernsehsystem mit einer neuartigen interaktiven Anwendung.

Interaktive Angebote können die Nutzung des Mediums Fernsehen nachhaltig verändern. Doch Studien zeigen, dass Zuschauer solche Angebote weniger gut annehmen als erwartet; insbesondere die unidirektionale Ausrichtung des heutigen Fernsehens sowie die bislang eher geringen Interaktionsmöglichkeiten wirken sich offenbar negativ auf die Akzeptanz aus. Interaktive Anwendungen im digitalen Fernsehen verringern solche Hindernisse. Diese Erfindung stellt eine neue Lösung für Zusatzdienste vor, die vollständige Interaktion mit Live-Sendungen ermöglichen.

### Einleitung

Analoge Fernsehtechnik ist hauptsächlich darauf ausgelegt, einen statischen Sendeablauf für eine Vielzahl von Zuschauern auszustrahlen. Die Übertragung ist dabei im Datenformat auf Bild und Ton konzentriert und erlaubt darüber hinaus kaum entscheidende Modifikationen. Insbesondere eine Rückleitung zum Sender ist hierbei nicht vorgesehen. Damit ist Fernsehen in seiner heutigen Form ein überwiegend passives Medium und der Interaktion wie z.B. der flexiblen Anpassung von Sendeinhalten an Zuschauerinteressen sind enge Grenzen gesetzt.

Dagegen verspricht das digitale Fernsehen wegen der mit den neuen Übertragungstechniken verbundenen Möglichkeiten zur Verbreitung von interaktiven Zusatzdiensten nicht nur eine Bereicherung der bisher üblichen Formate - sei es, dass herkömmliche Sendungen auf Zuschauer-Feedback bis hin zur Anpassung des Inhaltes nach Zuschauerwunsch direkt reagieren könnten, sei es, dass neue Spiel-Shows entstehen. Viel mehr noch eröffnet es neue Einsatzfelder im Bereich Tele-Learning/Tele-Teaching wie auch für den T-Commerce.

### Erste Schritte

Trotz der Einschränkung im analogen Fernsehen hat es in der Vergangenheit eine Reihe von Ansätzen gegeben, diesen monologen Charakter zu überwinden. Sie erstrecken sich über alle Formen der Interaktivität.

### Lokale Interaktivität

Der in der Austastlücke übertragene Teletext wird von fast allen Sendern benutzt, um sendungsbezogen oder sendungs-unabhängig Zusatzinformationen anzubieten. Die Interaktion erfolgt dabei lokal zwischen Empfangsgerät und Zuschauer. Aufgrund der beim Teletext eingeschränkten Darstellungsmöglichkeiten und des begrenzten Datenumfangs neigen Broadcaster heute jedoch eher dazu, solche Informationen auf eigenen Internet-Seiten anzubieten.

### Verzögerte Interaktivität

Eine erste Erweiterung der Interaktion ist die Einbeziehung von Zuschauerresonanz. Neben den bekannten Einschaltquoten hat der Zuschauer per Post oder über ein Service-Telefon die Möglichkeit, Einfluss zu nehmen. Ein Sender kann dann mit der Ausstrahlung der nächsten Sendung auf die Zuschauerbeteiligung eingehen. Auch hierbei wird seit einiger Zeit auch das Internet als Feedback-Medium eingesetzt.

### Live-Interaktivität

Die höchste, aber auch kritischste Form der Interaktivität ist die direkte Kommunikation mit der Sendung. Hierbei spielt bislang das Telefon eine entscheidende Rolle. Es bietet bereits eine Reihe von unterschiedlichen Einsatzmöglichkeiten: Neben der rein verbalen Kommunikation wird es zum Beispiel für Abstimmungen benutzt, bei denen allein der Anruf gezählt wird ("TED"). Unter Ausnutzung der Mehrfrequenzsignale können einfache Spiele darüber kontrolliert werden. Ein Beispiel hierzu ist die Sendung "Hugo" (Kabel 1), bei der eine Spielfigur per Telefon gesteuert Hindernissen ausweichen sollte.

Erweiterte Interaktionsmöglichkeiten bietet auch bei Live-Sendungen wieder das Internet zum Beispiel in Form von Abstimmungen oder Chaträumen.

### Medienbrüche

Wenn man nun diese Beispiele miteinander vergleicht, wird ein immer wieder auftretendes Merkmal deutlich: Mit Ausnahme des Teletextes bedienen sich alle herkömmlichen Interaktionsmechanismen alternativer Medien. Das heißt, der Zuschauer muss sich vom Fernseher abwenden und sich eines anderen Kommunikationsmittels bedienen, um an der Interaktion teilzunehmen. Man spricht in diesem Zusammenhang auch von einem Medienbruch. Da diese Medienbrüche exakt am Übergang von gewecktem Interesse beim Zuschauer (Einstellungsakzeptanz) zur tatsächlichen Nutzung des Angebots (Handlungsakzeptanz) liegen, beeinträchtigen sie die Gesamtakzeptanz des interaktiven Angebots empfindlich.

### Vollständige Interaktion ohne Medienbruch

Um diesen Hindernissen zu begegnen, wird mit der Erfindung ein Fernsehsystem vorgeschlagen, das es erlaubt, Interaktion mit einer Live-Sendung so zu gestalten, dass die Interaktion unmittelbar mit der Sendung stattfindet, ohne dass ein Medienbruch für den Zuschauer sichtbar wird. Dabei soll der Zuschauer die Möglichkeit erhalten, Objekte im Bild, für die eine Interaktionsmöglichkeit definiert wurde, direkt oder indirekt zu manipulieren.

Die Merkmale des erfindungsgemäßen Fernsehsystems sind in Anspruch 1 angegeben.

### Herausforderungen

Um Live-Interaktion mit einer laufenden Sendung zu ermöglichen, sind mehrere Probleme zu lösen.

### Objekte identifizieren

Zunächst müssen die zu manipulierenden Objekte für das System "greifbar" werden. Eigenschaften wie Größe, Position oder Aussehen müssen dem System bekannt und technisch variabel sein. Hier bietet sich die Nutzung von Virtueller Studiotechnik an, da die Objekte der Kulisse aus 3D-Modellen in Echtzeit berechnet werden und daher ― mit geeigneter Software ― in allen Eigenschaften direkt manipuliert werden können. Reale Objekte (wie etwa ein Moderator oder reale Elemente der Kulisse) sind durch Moderator-Tracking-Verfahren lokalisierbar. Damit können auch sie in die Interaktion einbezogen werden. Diese Objektidentifizierung funktioniert automatisch in Echtzeit unabhängig von den Kamerafahrten und beeinträchtigt damit den Produktionsablauf nicht.

### Synchronität

Ein weiterer kritischer Aspekt der direkten Kopplung von Sendung und Zuschauer ist die Kommunikation.

Bei der Übertragung der Sendung zum Zuschauer ist das Problem der Synchronisierung zwischen Audio/Video-Signalen und den zur Interaktion notwendigen Zusatzdaten durch die gesamte Playout-Kette zu lösen. Dieses Problem entsteht dadurch, dass Audio/Video- und Zusatzsignale unterschiedliche Verzögerungen durch Codierung und Multiplex erfahren; typischerweise ist die Codierung von Zusatzdaten weniger komplex und nimmt weniger Zeit in Anspruch als dies bei Audio und Video der Fall ist, so dass bei unkontrolliertem Einfügen von Zusatzdaten in den Datenstrom eine deutliche Asynchronität auf Empfängerseite wahrnehmbar ist. Dies kann durch Einführung von Zeitmarken für die Zusatzdaten und entsprechenden aktiven Synchronisierungspuffern in der Playout-Kette egalisiert werden.

### Komplexe Interaktion

Bei der Kommunikation vom Zuschauer zum Sender stellt die große Anzahl von Agenten, die einem einzigen Interaktionsobjekt gegenübersteht (N:1-Situation), hohe Ansprüche an die Koordination der einzelnen Interaktionsanforderungen: Zwischen dem Absenden einer Interaktion und dem Erscheinen der Änderungen im Bild vergeht eine gewisse Zeitspanne. Weitere Interaktionen, die innerhalb dieser Zeitspanne abgesandt werden, beziehen sich logisch auf das ursprüngliche Objekt, wirken aber durch ihr späteres Eintreffen auf das bereits veränderte Objekt. Dies führt zu Konsistenzproblemen und einem für den Zuschauer nicht nachvollziehbaren Verhalten des Systems.

### Verschiedene Herangehensweisen zur Lösung des Problems sind vorstellbar:

Zum einen besteht die Möglichkeit, Interaktion zu aggregieren. Dabei werden die Interaktionen mehrerer Zuschauer nach definierten Verfahren zu einer Gesamtinteraktion zusammengefasst; diese wirkt dann auf die Interaktionsobjekte.

Ebenso ist es möglich, die Interaktionen zu serialisieren; die eintreffenden Interaktionswünsche werden in eine Reihenfolge gebracht und nacheinander abgearbeitet. Dies ist konsistent jedoch nur für einen sehr eingeschränkten Satz von Aktionen möglich.

Als dritte Alternative bleibt noch der Einsatz von Sperrmechanismen, die es jeweils nur einem Zuschauer oder einer bestimmten Gruppe erlauben, mit dem gesperrten Objekt zu interagieren.

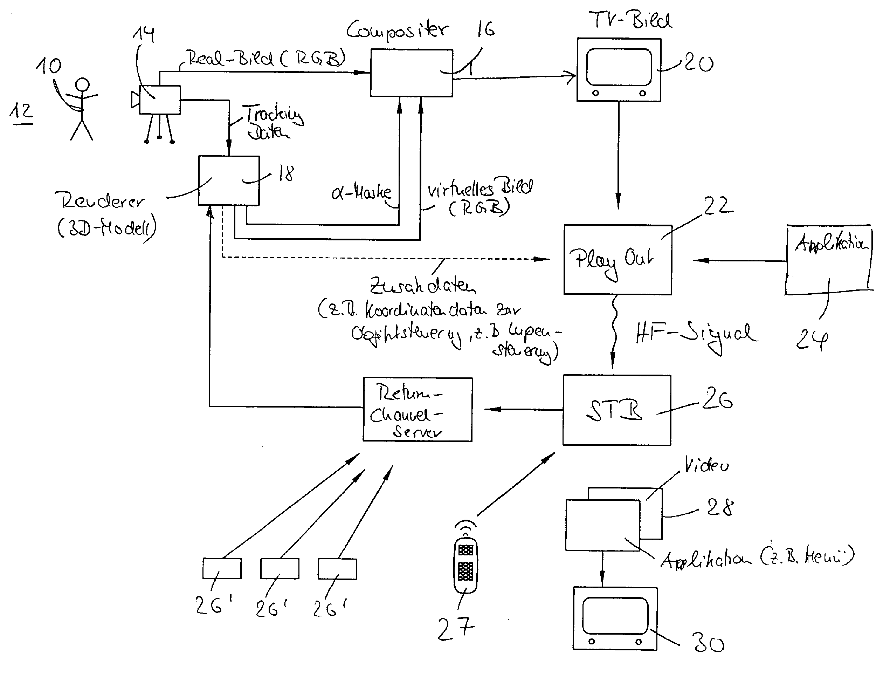

Die Erfindung wird unter Bezugnahme auf ein bevorzugtes Ausführungsbeispiel nachfolgend anhand der Zeichnung näher erläutert.

### Technische Realisierung

Das Gesamtsystem besteht aus im wesentlichen vier Funktionsblöcken. Ausgangspunkt ist ein Virtuelles Studio, in dem ein mixed reality Fernsehprogramm (realer Moderator in virtuellem Set) produziert wird. Verwendet wird das hauseigene System "3dk", das über Plugins vielfältige Möglichkeiten zum Eingriff in die Szenerie bietet.

Auf der Empfängerseite steht eine interaktive Anwendung auf der Basis des "Multimedia Home Platform" Standards. Diese wird mittels Software (DVB-CC ) in ein DSMCC Objektkarussell verpackt und zyklisch ausgespielt.

Im Playout Center wird das digitale Videosignal in MPEG-2 codiert, mit der Anwendung, den Zusatzdaten und den notwendigen Tabellen zu einem DVB-Transportstrom gemultiplext und für Satellitenempfang nach DVB-S moduliert. Das RF-Signal wird in eine MHP-SetTop-Box geführt, die Bild und Ton darstellt und die mitgeschickte Anwendung identifiziert und ausführt. Die Anwendung entnimmt dem Datenstrom die Zusatzinformationen über die Objekte im Bild und ermöglicht dem Zuschauer die direkte Interaktion. Die Interaktionswünsche werden über ein IP-basiertes Netzwerk zu einem zentralen Server übermittelt.

Für die Behandlung des N:1-Problems wurde eine Aggregationslösung auf XML-Basis realisiert; die eingehenden Interaktionsanforderungen werden in eine Datenbank eingestellt und über Statistiktools zu einer Gesamtinteraktion zusammengefasst. Die kumulierte Interaktion steuert ein Plugin in der Virtuellen Studio Software, das die Objektmanipulation realisiert.

Durch die Möglichkeit, die entstehenden Transportströme inklusive aller Applikations- und Zusatzdaten aufzuzeichnen und jederzeit wiederzugeben, eignet sich das System auch für den Play Back-Einsatz. Der hier beschriebene Aufbau konzentriert sich jedoch auf Live-Sendungen.

Zur Demonstration der Eigenschaften dieses Ansatzes wurden zwei gezielt unterschiedliche Anwendungsszenarien realisiert und getestet.

### Anwendungsszenario "Voting"

Als erste Anwendung wurde das "klassische" Beispiel der Zuschauerinteraktion gewählt: Die Zuschauer können über eine Frage aus dem Studio nach dem Multiple-Choice-Verfahren abstimmen. Die eingehenden Antworten werden in Form von wachsenden 3D-Säulen im Studio dargestellt.

Technisch betrachtet besteht der Unterschied zu existierenden Realisierungen dieses Szenarios darin, dass die Rückmeldungen vom Zuschauer nicht interpretiert sondern lediglich koordiniert werden. Das System benötigt damit keinerlei Wissen über die Bedeutung der Rückmeldungen z.B. als Werte auf einer Skala. Die eingehenden Antworten sind einzelne Änderungswünsche für bestimmte Objekte im Studio (die Größe einzelner Säulen soll z.B. verändert werden). Diese Änderungswünsche werden gesammelt und zusammengefasst, die dadurch entstehende aggregierte Interaktion steuert die Studio-Software - in diesem Fall die Größe der virtuellen Säulen - unabhängig von der Bedeutung dieser Änderung (dass die Größe der Säulen als Abstimmungsergebnis angesehen wird, ist lediglich eine mögliche Interpretation). Mit exakt dem gleichen Mechanismus ließen sich auch Form, Position, Farbe oder Oberflächenbeschaffenheit der Objekte modifizieren oder Animationen auslösen.

### Anwendungsszenario "Hot Spots"

Das zweite Beispiel zeigt die Möglichkeit der lokalen Interaktion mit Objekten im Studio, indem der als "clickable video" bekannt gewordene Ansatz in eine Live-Sendung integriert wurde. Dabei werden im Studio Objekte ausgewählt, mit denen eine lokale Interaktion möglich sein soll; dies können sowohl virtuelle als auch reale Objekte sein. Im Versuchsaufbau wurden drei virtuelle Objekte und der Moderator als sogenannte Hot Spots definiert, deren Position dem Empfänger durch Zusatzinformationen kontinuierlich signalisiert wird. Der Empfänger bietet die Möglichkeit, mit einem Zeigerobjekt zwischen den Punkten zu wählen; die Punkte verhalten sich dabei "magnetisch", so dass der Zeiger nicht frei beweglich ist sondern von einem Hot Spot zum nächsten springt. Mit einem Tastendruck der Fernbedienung können Informationstafeln zu den ausgewählten Objekten angezeigt werden. Diese Form der Interaktion wurde hauptsächlich aus Gründen der leichten Realisierbarkeit gewählt; wesentlich komplexere Interaktionen sind ebenso möglich, vom Abruf von Zusatzinformationen über das Starten von Diensten bis hin zu Interaktionsanforderungen zurück zum Studio, um die Kette vollständig zu schließen.

In der Zeichnung ist ein Ausführungsbeispiel der Erfindung näher erläutert.

Diese Zeichnung zeigt die Hauptkomponenten und deren signaltechnische und funktionale Verbindung eines erfindungsgemäßen Fernsehsystems.

Von beispielsweise einem Moderator 10 in einem Blauraum 12 wird mittels einer Studiokamera 14 ein reales Bild aufgenommen. Dieses reale Bild wird einem Compositer 16 zugeführt, in dem das reale Bild und das virtuelle Bild mit Alpha-Maske gemischt wird. Die beiden letztgenannten Signale werden von einem Renderer 18 erzeugt, bei dem es sich um einen Studiorechner zur Erzeugung des virtuellen Bildes handelt und der von der Studiokamera 14 Tracking-Daten empfängt. Die Alpha-Maske und das virtuelle Bild werden von diesem Studiorechner bzw. Renderer 18 ausgegeben, und zwar an den Compositer 16, in dem beide Bilder gemischt werden und als Fernsehbild 20 ausgegeben werden.

Dieses Fernsehbild 20 wird im sogenannten Play Out 22 mit Applikationsprogrammen und mit Zusatzdaten verbunden. Die Applikationsprogramme werden von einer bei 24 dargestellten Einheit erzeugt bzw. von dieser Einheit zur Verfügung gestellt, während die Zusatzdaten von dem Renderer 18 geliefert werden.

Das verbundene Signal, das sich als Verbund des Fernsehbildes 20, des Applikationsprogramms der Einheit 24 und den Zusatzdaten darstellt, wird von dem Play Out 22 oder einer nachgeschalteten Sendevorrichtung beispielsweise als HF-Signal ausgesendet und von einer Empfangseinrichtung in Form einer sogenannten SetTop-Box 26 empfangen. In der SetTop-Box 26, die mittels einer Fernbedienung o.dgl. von einem Zuschauer bedienbar ist, erfolgt die Trennung des Verbundsignals in ein Videosignal und in ein die Applikation wiedergebendes Signal. Dieses Overlay 28 wird auf einem Fernseher 30 angezeigt.

Erfindungsgemäß ist es nun für einen Zuschauer möglich, über die Fernbedienung 27 und ggf. auch über die Fernbedienung für den Fernseher 30 direkt auf den Renderer 18 und damit auf das Fernsehbild einzuwirken. Hierzu ist die SetTop-Box 26 über einen Return-Channel-Ausgang mit einem Return-Channel-Server 32 verbunden, der vorzugsweise Kommandos nicht nur über diese eine SetTop-Box 26 sondern über eine Vielzahl von SetTop-Boxen 26' empfängt. In dem Return-Channel-Server 32 werden die empfangenen Kommandodaten applikationsspezifisch verarbeitet und danach dem Renderer 18 zugeführt. Im Renderer 18 werden die Ausgangssignale des Return-Channel-Servers 32 verarbeitet und in die Alpha-Maske und die virtuellen BildSignale eingebunden, die dann im Compositer 16 mit dem realen Bild gemischt werden.

### Ausblick

Die hier beschriebenen Anwendungsszenarien dienen lediglich als "Proof of Concept", die Anwendungsmöglichkeiten sind vielfältig. Mit der hier beschriebenen Realisierung lassen sich alle eingangs erwähnten Interaktionsformen realisieren, ohne dass ein Medienbruch in Kauf genommen werden muss.

Spielanwendungen mit verteilt genutztem gemeinsamen virtuellen Spielfeld sind ebenso denkbar wie ein Einsatz als Joint-Editing Werkzeug, für breitbandige Kooperationsunterstützung oder im Bereich Business TV.

Mit wachsender Leistungsfähigkeit der Empfangsgeräte werden komplexere Interaktionen als heute realisierbar werden. Insbesondere lokale Berechnungsmöglichkeiten für dreidimensionale Objekte und der Einsatz von MPEG-4 lassen interessante neue Anwendungsfelder erwarten.

## Patentansprüche

1. Fernsehsystem mit
- einer Studiokamera (14) zur Erzeugung eines realen Bildes eines realen Objekts in einem virtuellen Studio,
- einem Studiorechner (18) zur Erzeugung eines virtuellen Bildes,
- einer mit der Studiokamera (14) und dem Studiorechner (18) verbundenen Mischvorrichtung (16) zum Mischen des realen und des virtuellen Bildes zur Erzeugung eines Fernsehbildes (20) des virtuellen Studios,
- einer mit dem Studiorechner (18) verbundenen Einrichtung zur Erzeugung von Zusatzdaten,
- einer Einrichtung (22) zur Kodierung der Zusatzdaten,
- einer Einrichtung (22) zur Kodierung von Computerprogrammen,
- einer mit den Kodiereinrichtungen (22) verbundenen Vorrichtung (22) zum Verbinden der kodierten Zusatzdaten und der kodierten Computerprogramme zu Verbundsignalen,
- einer mit der Verbundvorrichtung (22) gekoppelten Vorrichtung (22) zur Übertragung der Verbundsignale,
- einer mit dem Studiorechner (18) verbundenen Einrichtung (22) zur Übertragung unkodierter und unverbundener Zusatzdaten und Computerprogrammdaten,
- einer mit der Mischvorrichtung (16) verbundenen Kodiervorrichtung (22) zum Kodieren des Fernsehbildes in Fernsehsignale,
- einer mit der Kodiervorrichtung verbundenen Sendeeinrichtung (22) zum Senden der Fernsehsignale,
- einer Empfangseinrichtung (26) zum Empfangen der gesendeten Fernsehsignale,
- einer Empfangsvorrichtung (26) zum Empfangen der Verbundsignale oder der unkodierten oder unverbundenen Zusatzdaten und Computerprogrammdaten,
- einer mit der Empfangsvorrichtung (22) gekoppelten Trennvorrichtung (22) zum Trennen der Verbundsignale,
- einer mit der Trennvorrichtung (26) verbundenen Dekodiereinrichtung (26) zum Dekodieren der Computerprogramme,
- einer mit der Trennvorrichtung (26) verbundenen Dekodiereinrichtung (26) zum Dekodieren der Zusatzdaten,
- einer Dekodiervorrichtung (26) zum Dekodieren der empfangenen Fernsehsignale in ein Fernsehbild,
- einer mit der Dekodiervorrichtung (26) verbundenen Anzeigevorrichtung (30) zum Anzeigen des Fernsehbildes,
- einer mit der Anzeigevorrichtung (30), der Dekodiereinrichtung (26) und der Empfangsvorrichtung (26) verbundenen Ausführungsvorrichtung zur Verarbeitung der empfangenen Computerprogrammdaten und Zusatzdaten,
- einer Bedieneinheit (27) zum Eingeben von Daten in die Dekodiervorrichtung (26) und
- einem Server (32), der von der Dekodiervorrichtung (26) Signale empfängt, diese kodiert und Steuersignale zur den Signalen der Dekodiervorrichtung (26) entsprechenden Beeinflussung des virtuellen Bildes an den Studiorechner (18) zur Erzeugung des virtuellen Bildes ausgibt.

2. Fernsehsystem nach Anspruch 1, **dadurch gekennzeichnet, dass** der Server (32) von einer Vielzahl von Dekodiervorrichtungen (26,26') Signale empfängt, diese verarbeitet und zur den Signalen der Dekodiervorrichtung (26,26') entsprechenden Beeinflussung des virtuellen Bildes Steuersignale an den Studiorechner (18) ausgibt.

3. Fernsehsystem nach Anspruch 1 oder 2, **dadurch gekennzeichnet, dass** die Verbundsignale, die Zusatzdaten und/oder die Computerprogramme über den gleichen Kanal wie die Fernsehsignale oder über einen dazu getrennten Kanal gesendet und empfangen werden.
